# EUROPEAN PATENT SPECIFICATION

(11) **EP 3 168 035 B1**
(45) Date of publication and mention of the grant of the patent: **13.11.2019**
(21) Application number: 16198621.1
(22) Date of filing: 14.11.2016
(51) Int. Cl.: B29C 64/214, B29C 64/153, B29C 64/393, B33Y 50/02

(54) **ADDITIVE MANUFACTURING QUALITY CONTROL SYSTEMS**
GENERATIVE FERTIGUNG VON QUALITÄTSKONTROLLSYSTEMEN
SYSTÈMES DE CONTRÔLE DE LA QUALITÉ D'IMPRESSION 3D

(30) Priority: 13.11.2015 US 201514940242
(43) Date of publication of application: 17.05.2017
(73) Proprietor: Hamilton Sundstrand Corporation, Charlotte, NC 28217 (US)
(72) Inventor: GIULIETTI, Diana, Tariffville, Connecticut 06081 (US); VERSLUYS, Kiley J, Hartford, Connecticut 06103 (US)
(74) Representative: Dehns

(56) References cited:
- WO-A1-2015/103476
- DE-A1-102012 007 791
- US-A1- 2006 208 396

## Description

### BACKGROUND

### 1. Field

The present disclosure relates to additive manufacturing, more specifically to quality control for additive manufacturing devices and processes.

### 2. Description of Related Art

Part swell puts a recoater at risk for crashing into the part, thus damaging the part or the recoater itself. There is no automatic system for detecting defects before they are irrecoverable. Also, sometimes a powder bed fusion machine experiences incomplete recoats or short feeds. There is currently no system in place to monitor recoat quality or incomplete coverage.

Additive manufacturing systems are disclosed in US 2006/0208396, DE 10 2012 007 791 and WO 2015/103476. In these systems, it is possible to detect abnormal sintering.

Such conventional methods and systems have generally been considered satisfactory for their intended purpose. However, there is still a need in the art for improved additive manufacturing systems. The present disclosure provides a solution for this need.

### SUMMARY

The invention is defined by a method in accordance with claim 1. The method includes receiving torque data of a powder recoater operatively connected to an additive manufacturing system. The torque data includes torque data of the recoater when the recoater traverses a build area. The method also includes determining a quality of one or more of an additive manufacturing process and/or product based on the torque data. Determining the quality includes comparing the torque data with reference data to determine whether the torque data is within a predetermined range of the reference data. The method comprises determining the quality by determining if a powder recoat on the build area is incomplete when the torque data is under a minimum threshold.

The method can include one or more of alerting a user and/or prompting the user to recoat the build area. In certain embodiments, the method can include causing the powder recoater to recoat the build area.

Determining the quality can include determining if an additively manufactured product in the build area has part swell if a predetermined swell torque is received. Determining if an additively manufactured product in the build area has part swell can include determining if the part swell is recoverable part swell or irrecoverable part swell based on received torque data.

In certain embodiments, determining the quality can include correlating the torque data with recoater location data and/or reference build location data for the additively manufactured product, such that the location of one or more specific additively manufactured products can be determined if the one or more of the additively manufactured products has part swell.

If the part swell is determined to be recoverable, the method can include lowering a laser power on and/or at a region of the one or more of the additively manufactured products that have recoverable part swell. If the part swell is determined to be irrecoverable, the method can include alerting a user and/or shutting off a laser power to the additively manufactured products that have irrecoverable part swell.

A non-transitory computer readable medium includes computer readable instructions for a controller that is configured to control an additive manufacturing process, the computer readable instructions including a method or any suitable portion thereof as described above.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a flow chart of an embodiment of a method in accordance with this disclosure;
Fig. 2 is a perspective view of an embodiment of a system in accordance with this disclosure;
Fig. 3 is a plan view of an embodiment of a build area in accordance with this disclosure, showing an incomplete recoat such that portions of additively manufactured products are exposed; and
Fig. 4 is a plan view of an embodiment of a build area in accordance with this disclosure, showing part swell such that an additively manufactured product are exposed above the recoated powder layer.

### DETAILED DESCRIPTION

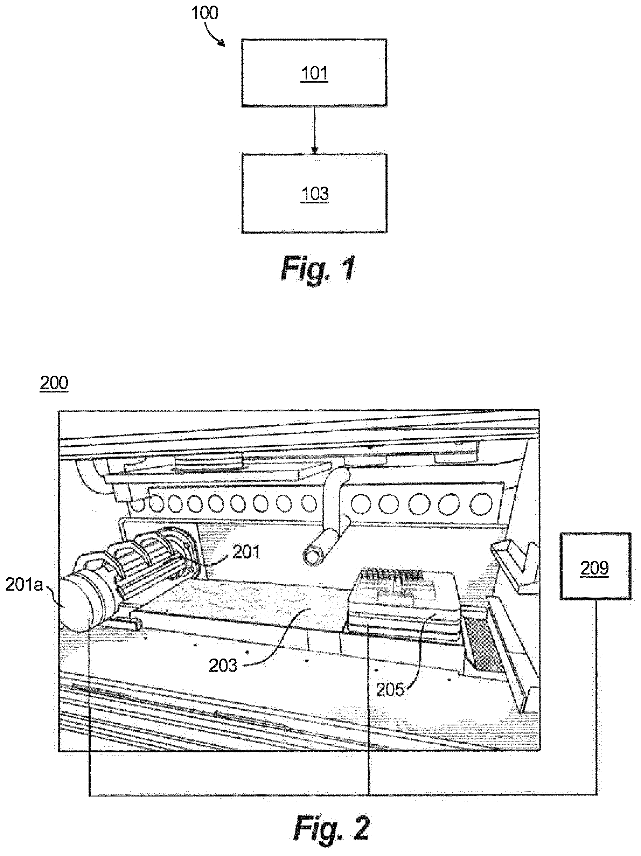

Reference will now be made to the drawings wherein like reference numerals identify similar structural features or aspects of the subject disclosure. For purposes of explanation and illustration, and not limitation, an illustrative view of an embodiment of a method in accordance with the disclosure is shown in Fig. 1 and is designated generally by reference character 100. Other embodiments and/or aspects of this disclosure are shown in Figs. 2 to 4. The systems and methods described herein can be used to monitor a quality in real time or after the fact of an additive manufacturing process and/or product thereof.

Referring to Figs. 1 and 2, a method 100 includes receiving torque data 101 of a powder recoater 201 operatively connected to an additive manufacturing system 200. The powder recoater 201 includes a roller 201a for levelling/compacting powder which rotates relative to the powder bed 203. As is appreciated by those having ordinary skill in the art, the recoater 201 is configured to sweep powder (e.g., by translating from left to right in the embodiment shown in Fig. 2) from the powder bed 203, push it onto a build area 205 (shown in a fully lifted position), and roll over the deposited powder with the roller 201a to coat the build area 205 with a layer of powder of a predetermined thickness. A controller 209 can receive the torque data and control the recoater 201 and/or any other suitable component of system 200.

The torque data can be obtained via any suitable source (e.g., a torque sensor placed on the roller of the recoater 201) and/or can be calculated from motor speed and/or input power. The torque data includes torque data of the recoater 201 when the recoater 201 traverses the build area 205.

The method also includes determining a quality 103 of one or more of an additive manufacturing process and/or product based on the torque data. Determining the quality 103 can include comparing the torque data with reference data to determine whether the torque data is within a predetermined range of the reference data. For example, known thresholds for normal operations (e.g., proper coating, no part swell) can be set or determined.

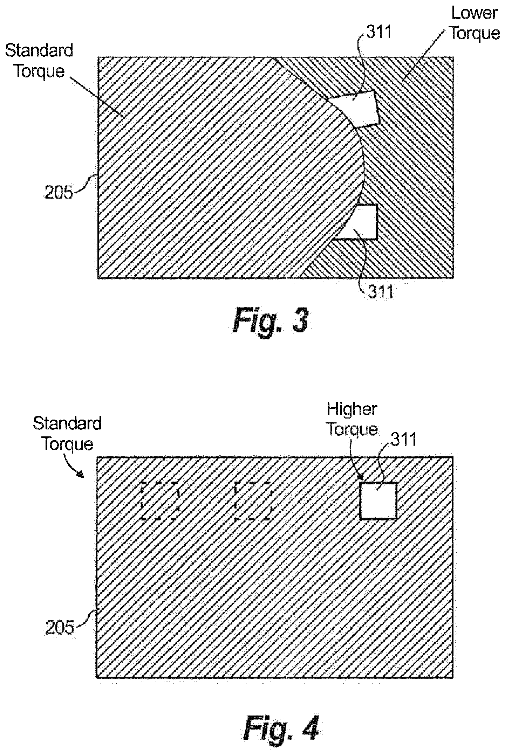

Referring to Fig. 3, determining the quality 103 includes determining if a powder recoat on the build area 205 is incomplete. Torque values under a minimum threshold can indicate incomplete coating (e.g., short feed such that a product 311 is exposed, insufficient layer thickness), for example. In such a case, the method 100 can include one or more of alerting a user and/or prompting the user to recoat the build area and/or that there is insufficient powder, for example. In certain embodiments, the method 100 can include causing the powder recoater 201 to recoat the build area 205 (e.g., via controller 209).

Referring to Fig. 4, determining the quality 103 can include determining if an additively manufactured product 311 in the build area 205 has part swell if a predetermined swell torque is received. Torque values above a maximum threshold can indicate part swell (e.g., because the recoater pushes against the swollen part that protrudes from the powder as shown in Fig. 4). In certain embodiments, determining the quality 103 can include correlating the torque data with recoater location data and/or reference build location data for the additively manufactured product 311, such that the location of one or more specific additively manufactured products 311 can be determined if the one or more of the additively manufactured products 311 has part swell.

Determining if an additively manufactured product 311 in the build area 205 has part swell can include determining if the part swell is recoverable part swell or irrecoverable part swell based on received torque data. If the part swell is determined to be recoverable, the method 100 can include lowering a laser power on and/or at a region of the one or more of the additively manufactured products 311 that have recoverable part swell. If the part swell is determined to be irrecoverable, the method 100 can include alerting a user and/or shutting off a laser power to the additively manufactured products 311 that have irrecoverable part swell.

A non-transitory computer readable medium includes computer readable instructions for a controller 209 that is configured to control an additive manufacturing process. The computer readable instructions include a method 100 or any suitable portion thereof as described above.

As described above, sensing torque on the roller of recoater 201 allows for detection of abnormalities in-process which can help avoid a build crash or other process error. Also, the controller 209 can be configured to react to such detection of abnormalities and can either automatically stop, continue, or modify the build process in any suitable manner. Such torque monitoring is less complicated and less expensive than existing forms of process monitoring.

The methods and systems of the present disclosure, as described above and shown in the drawings, provide for additive manufacturing systems and methods with superior properties including improved quality control.

## Claims

1. A method (100), comprising:
receiving (101) torque data of a powder recoater (201) operatively connected to an additive manufacturing system (200), wherein the torque data includes torque data of the recoater (201) when the recoater traverses a build area (205); and
determining (103) a quality of one or more of an additive manufacturing process and/or product based on the torque data;
wherein determining (103) the quality includes comparing the torque data with reference data to determine whether the torque data is within a predetermined range of the reference data;
**characterized in that** determining (103) the quality includes determining if a powder recoat on the build area (205) is incomplete when the torque data is under a minimum threshold.

2. The method of claim 1, further comprising one or more of alerting a user and/or prompting the user to recoat the build area (205).

3. The method of claim 1, further comprising causing the powder recoater (201) to recoat the build area (205).

4. The method of claim 1, wherein determining (103) the quality includes determining if an additively manufactured product in the build area (205) has part swell if a predetermined swell torque is received.

5. The method of claim 4, wherein determining if an additively manufactured product in the build area (205) has part swell further includes determining if the part swell is recoverable part swell or irrecoverable part swell based on received torque data.

6. The method of claim 5, wherein determining (103) the quality includes correlating the torque data with recoater location data and/or reference build location data for the additively manufactured product, such that the location of one or more specific additively manufactured products can be determined if the one or more of the additively manufactured products has part swell.

7. The method of claim 6, wherein if the part swell is determined to be recoverable, the method further includes lowering a laser power on and/or at a region of the one or more of the additively manufactured products that have recoverable part swell.

8. The method of claim 6, wherein if the part swell is determined to be irrecoverable, the method further includes alerting a user and/or shutting off a laser power to the additively manufactured products that have irrecoverable part swell.

9. A non-transitory computer readable medium, comprising computer readable instructions for a controller of an additive manufacturing apparatus that when run on the controller causes the additive manufacturing apparatus to perform the additive manufacturing method of any of claims 1 to 8.

## Patentansprüche

1. Verfahren (100), umfassend:
Empfangen (101) von Drehmomentdaten eines Pulverwiederbeschichters (201), der in Wirkverbindung mit einem System (200) zur generativen Fertigung steht, wobei die Drehmomentdaten die Drehmomentdaten des Wiederbeschichters (201), wenn sich der Wiederbeschichter über einen Baubereich (205) bewegt, umfasst; und
Ermitteln (103) einer Qualität eines oder mehrerer aus einem generativen Fertigungsvorgang und/oder Produkt basierend auf den Drehmomentdaten;
wobei das Ermitteln (103) der Qualität das Vergleichen der Drehmomentdaten mit Referenzdaten umfasst, um zu ermitteln, ob die Drehmomentdaten innerhalb eines vorgegebenen Bereichs der Referenzdaten liegen;
**dadurch gekennzeichnet, dass** das Ermitteln (103) der Qualität das Feststellen umfasst, dass eine Pulverwiederbeschichtung auf dem Baubereich (205) unvollständig ist, wenn die Drehmomentdaten unter einem Mindestschwellenwert liegen.

2. Verfahren nach Anspruch 1, ferner umfassend eines oder mehrere aus dem Warnen eines Benutzers und/oder Auffordern des Benutzers, den Baubereich (205) wiederzubeschichten.

3. Verfahren nach Anspruch 1, ferner umfassend das Veranlassen des Pulverwiederbeschichters (201), den Baubereich (205) wiederzubeschichten.

4. Verfahren nach Anspruch 1, wobei das Ermitteln (103) der Qualität das Ermitteln umfasst, ob ein generativ gefertigtes Produkt in dem Baubereich (205) ein Teilquellen aufweist, falls ein vorgegebenes Quelldrehmoment empfangen wird.

5. Verfahren nach Anspruch 4, wobei das Ermitteln, ob ein generativ gefertigtes Produkt in dem Baubereich (205) ein Teilquellen aufweist, ferner das Ermitteln umfasst, ob das Teilquellen ein behebbares Teilquellen ist oder ein unbehhebbares Teilquellen ist, basierend auf den empfangenen Drehmomentdaten.

6. Verfahren nach Anspruch 5, wobei das Ermitteln (103) der Qualität das Korrelieren der Drehmomentdaten mit Positionsdaten des Wiederbeschichters und/oder Referenzbaupositionsdaten für das generativ gefertigte Produkt beinhaltet, so dass die Position eines oder mehrerer spezifischer generativ gefertigter Produkte ermittelt werden kann, wenn das eine oder die mehreren der generativ gefertigten Produkte Teilquellen aufweist/aufweisen.

7. Verfahren nach Anspruch 6, wobei, wenn festgestellt wird, dass das Teilquellen behebbar ist, das Verfahren ferner das Senken einer Laserleistung auf und/oder an einem Bereich des einen oder der mehreren der generativ gefertigten Produkte, die ein behebbares Teilquellen aufweist/aufweisen, beinhaltet.

8. Verfahren nach Anspruch 6, wobei, wenn festgestellt wird, dass das Teilquellen unbehebbar ist, das Verfahren ferner das Warnen eines Benutzers und/oder Abschalten einer Lasterleistung auf die generativ gefertigten Produkte, die unbehebbares Teilquellen aufweisen, beinhaltet.

9. Nicht flüchtiges computerlesbares Medium, umfassend computerlesbare Anweisungen für eine Steuerung einer Vorrichtung zur generativen Fertigung, das, wenn es auf der Steuerung ausgeführt wird, bewirkt, dass die Vorrichtung der generativen Fertigung das Verfahren zur generativen Fertigung nach einem der Ansprüche 1 bis 8 durchführt.

## Revendications

1. Procédé (100), comprenant :
la réception (101) de données de couple d'un dispositif de revêtement de poudre (201) relié de manière fonctionnelle à un système d'impression 3D (200), dans lequel les données de couple comprennent des données de couple du dispositif de revêtement (201) lorsque le dispositif de revêtement traverse une zone de construction (205) ; et
la détermination (103) d'une qualité d'un ou plusieurs d'un produit et/ou processus d'impression 3D sur la base des données de couple ;
dans lequel la détermination (103) de la qualité comprend la comparaison des données de couple avec des données de référence pour déterminer si les données de couple se trouvent dans une plage prédéterminée des données de référence ;
**caractérisé en ce que** la détermination (103) de la qualité comprend le fait de déterminer si un revêtement de poudre sur la zone de construction (205) est incomplet lorsque les données de couple se trouvent sous un seuil minimum.

2. Procédé selon la revendication 1, comprenant en outre une ou plusieurs d'une alerte à un utilisateur et/ou d'une incitation pour l'utilisateur à revêtir la zone de construction (205).

3. Procédé selon la revendication 1, comprenant en outre le fait d'amener le dispositif de revêtement de poudre (201) à revêtir la zone de construction (205).

4. Procédé selon la revendication 1, dans lequel la détermination (103) de la qualité comprend le fait de déterminer si un produit imprimé en 3D dans la zone de construction (205) présente un gonflement partiel si un couple de gonflement prédéterminé est reçu.

5. Procédé selon la revendication 4, dans lequel le fait de déterminer si un produit imprimé en 3D dans la zone de construction (205) présente un gonflement partiel comprend en outre le fait de déterminer si le gonflement partiel est un gonflement partiel récupérable ou un gonflement partiel irrécupérable sur la base des données de couple reçues.

6. Procédé selon la revendication 5, dans lequel la détermination (103) de la qualité comprend la corrélation des données de couple avec des données de localisation de dispositif de revêtement et/ou des données de localisation de construction de référence pour le produit imprimé en 3D, de sorte que la localisation d'un ou plusieurs produits imprimés en 3D spécifiques peut être déterminée si l'un ou plusieurs des produits imprimés en 3D présentent un gonflement partiel.

7. Procédé selon la revendication 6, dans lequel, s'il est déterminé que le gonflement partiel est récupérable, le procédé comprend en outre la diminution d'une puissance laser sur et/ou au niveau d'une région de l'un ou plusieurs des produits imprimés en 3D qui présentent un gonflement partiel récupérable.

8. Procédé selon la revendication 6, dans lequel s'il est déterminé que le gonflement partiel est irrécupérable, le procédé comprend en outre l'alerte à un utilisateur et/ou l'arrêt d'une puissance laser vers les produits imprimés en 3D qui présentent un gonflement partiel irrécupérable.

9. Support lisible par ordinateur non transitoire, comprenant des instructions lisibles par ordinateur pour un dispositif de commande d'un appareil d'impression 3D qui, lorsqu'elles sont exécutées sur le dispositif de commande, font en sorte que l'appareil d'impression 3D mette en œuvre le procédé d'impression 3D selon l'une quelconque des revendications 1 à 8.
